(19) Europäisches Patentamt
European Patent Office
Office européen des brevets

(11) Veröffentlichungsnummer: **0 455 982 A1**

# (12) EUROPÄISCHE PATENTANMELDUNG

(21) Anmeldenummer: **91105288.4**

(22) Anmeldetag: **03.04.91**

(51) Int. Cl.[5]: **C07F 9/54**

(30) Priorität: **02.05.90 DE 4014073**

(43) Veröffentlichungstag der Anmeldung: **13.11.91 Patentblatt 91/46**

(84) Benannte Vertragsstaaten: **AT BE CH DE ES FR GB IT LI NL**

(71) Anmelder: **HOECHST AKTIENGESELLSCHAFT**
**Postfach 80 03 20**
**W-6230 Frankfurt am Main 80(DE)**

(72) Erfinder: **Erpenbach, Heinz, Dr.**
**Oberbuschweg 22**
**W-5000 Köln(DE)**
Erfinder: **Gradl, Reinhard, Dr.**
**Heimbacher Weg 27**
**W-5042 Erftstadt(DE)**
Erfinder: **Jägers, Erhard, Dr.**
**Hemberger Strasse 75**
**W-5303 Bornheim(DE)**
Erfinder: **Seidel, Andreas, Dr.**
**Luxemburger Strasse 469**
**W-5000 Köln(DE)**
Erfinder: **Weferling, Norbert, Dr.**
**Schaesbergstrasse 13**
**W-5030 Hürth(DE)**

## (54) Verfahren zur Herstellung von methanolischer Methyl-tri-n-alkyl-phosphoniumiodid-Lösung.

(57) Es wird ein Verfahren zur Herstellung von methanolischer Methyl-tri-n-alkyl-phosphoniumiodid-Lösung mit 3 bis 8 C-Atomen in der Kohlenstoffkette aus Tri-n-alkylphosphin und Methyliodid in einem Verdünnungsmittel angegeben, bei dem man als Verdünnungsmittel Methanol einsetzt.

EP 0 455 982 A1

Rank Xerox (UK) Business Services

Die Erfindung betrifft ein Verfahren zur Herstellung von methanolischer Methyl-tri-n-alkyl-phosphoniumiodid-Lösung mit 3 bis 8 C-Atomen in der Kohlenstoffkette aus Tri-n-alkylphosphin und Methyliodid in einem Verdünnungsmittel.

Quartäre Phosphoniumsalze sind wirksame Promotoren bei Carbonylierungsreaktionen zur Herstellung von Essigsäure und Essigsäureanhydrid, wenn Edelmetallverbindungen, insbesondere Rhodiumverbindungen, als Katalysator eingesetzt werden. In der DE-A-24 50 965 werden entsprechende Herstellweisen beschrieben.

In neuerer Zeit werden insbesondere die Rhodiumcarbonylkomplexe $[CH_3P(C_4H_9)_3]Rh(CO)I_4$ oder $[CH_3P(C_4H_9)_3]Rh(CO)_2I_2$ für wirksame Katalysatorsysteme beschrieben (EP-B-0 240 703).

Die quartären Phosphoniumhalogenide werden gemäß dem Schema

$$R_3P + Hal\text{-}R' \rightarrow [R_3\overset{\oplus}{P}\text{-}R']\,Hal^{\ominus}$$

hergestellt. Beim Umsatz von Methyliodid mit tertiären Phosphinen erfolgt die Umsetzung sehr heftig, so daß Verdünnungsmittel wie Ether oder Benzol zugesetzt werden müssen (HOUBEN-WEYL: "Methoden der Organischen Chemie", 1963, Band 12.1, Seite 79).

Technisch wird heute als Verdünnungsmittel Hexan verwendet. Nachteilig bei allen bisher genutzten Verdünnungsmitteln ist, daß das quartäre Phosphoniumhalogenid als Salz ausfällt und vor der Weiterverwendung als Promotor bei Carbonylierungsreaktionen vom Verdünnungsmittel abgetrennt werden muß.

Überraschend wurde nun gefunden, daß die Umsetzung von Tri-n-alkylphosphin mit 3 bis 8 C-Atomen in der Kohlenstoffkette mit Methyliodid in einer homogenen Phase erfolgt, wenn man als Verdünnungsmittel Methanol einsetzt. Die Bildung der gewünschten Phosphoniumsalze erfolgt dabei quantitativ bezogen auf die im Unterschuß eingesetzte Komponente.

Das Verfahren der Erfindung kann weiterhin bevorzugt und wahlweise dadurch gekennzeichnet sein, daß man

a) unter Luftausschluß arbeitet,

b) Tri-n-alkylphosphin und Methyliodid in einem molaren Verhältnis von 1 zu (1,1 bis 0,95) einsetzt,

c) ein molares Verhältnis Methyl-n-alkyl-phosphoniumiodid zu Methanol von 1 zu (1 bis 20), insbesondere von 1 zu (4 bis 10) einstellt.

Mit dem Verfahren der Erfindung entfällt eine vollständige Abtrennung eines artfremden Verdünnungsmittels und Wiederauflösung des Methyl-tri-n-alkyl-phosphoniumiodids in der Carbonylierungsreaktionsmischung; weiter sind die Carbonylierungsprodukte nicht mit artfremdem Verdünnungsmittel verunreinigt und die Reinigung oder Entsorgung des nach mehrmaligem Gebrauch verunreinigten artfremden Verdünnungsmittels entfällt.

Beispiel 1

In einem 1 l Mehrhalskolben mit Rührer, Innenthermometer, Rückflußkühler, Tropftrichter und Stickstoffüberleitung wird nach Inertisierung mit Stickstoff eine Mischung von 168 g (1,05 mol) Tri-n-propylphosphin und 320 g Methanol vorgelegt. Dazu werden bei Raumtemperatur innerhalb von 2 Std. unter intensivem Rühren 150 g (1,06 mol) Methyliodid getropft. Nach Beendigung des Zutropfens und Abklingen der exothermen Reaktion wird die Reaktionsmischung noch für 1 Std. unter Rückflußbedingungen gehalten.
Das $^{31}P$-NMR-Spektrum der klaren, farblosen Lösung wies kein Signal der Ausgangsverbindung Tri-n-propylphosphin mehr auf (- 33 ppm). 99 % der $^{31}P$-NMR-Signalintensität für Methyltripropylphosphoniumiodid wurden bei + 31 ppm gefunden.

Beispiel 2

In einem 0,5 l Mehrhalskolben mit Rührer, Innenthermometer, Tropftrichter, Rückflußkühler und Stickstoffüberleitung werden nach Inertisierung 202 g (1 mol) Tributylphosphin und 160 g (5 mol) Methanol vorgelegt. Unter Schutzgasatmosphäre wird die Mischung auf 60 °C erwärmt und innerhalb von 40 min 157 g (1,1 mol) Methyliodid zugetropft. Durch die freiwerdende Reaktionsenthalpie wird die Mischung ohne zusätzliche Wärmezufuhr am Sieden gehalten. Nach der Methyliodidzugabe wird die klare und farblose Reaktionsmischung noch 45 min lang bei 65 °C gehalten.
Die Auswertung des $^{31}P$-NMR-Spektrums des Produkts ergab, daß das Tributylphosphin quantitativ zum

Methyl-tributylphosphoniumiodid (+ 32 ppm) umgesetzt war.

Beispiel 3

Wie in Beispiel 2 beschrieben, werden zu 190 g (0,52 mol) Tri-n-octylphosphin in 275 g Methanol 70 g (0,5 mol) Methyliodid getropft. Man läßt noch 2 Std. bei 65 °C nachreagieren.
Erwartungsgemäß wurde neben Oxidspuren und einem Rest von nicht umgesetztem Tri-n-octylphosphin (3,5 %; - 32,5 ppm) im $^{31}$P-NMR-Spektrum des Produkts nur Methyl-trioctylphosphoniumiodid (+ 31 ppm) gefunden.

**Patentansprüche**

1. Verfahren zur Herstellung von methanolischer Methyl-tri-n-alkyl-phosphoniumiodid-Lösung mit 3 bis 8 C-Atomen in der Kohlenstoffkette aus Tri-n-alkylphosphin und Methyliodid in einem Verdünnungsmittel, dadurch gekennzeichnet, daß man als Verdünnungsmittel Methanol einsetzt.

2. Verfahren nach Anspruch 1, dadurch gekennzeichnet, daß man unter Luftausschluß arbeitet.

3. Verfahren nach einem der Ansprüche 1 oder 2, dadurch gekennzeichnet, daß man Tri-n-alkylphosphin und Methyliodid in einem molaren Verhältnis von 1 zu (1,1 bis 0,95) einsetzt.

4. Verfahren nach einem der Ansprüche 1 bis 4, dadurch gekennzeichnet, daß man ein molares Verhältnis Methyl-tri-n-alkyl-phosphoniumiodid zu Methanol von 1 zu (1 bis 20), insbesondere von 1 zu (4 bis 10) einstellt.

Europäisches
Patentamt

# EUROPÄISCHER RECHERCHENBERICHT

Nummer der Anmeldung

EP 91 10 5288

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | HOUBEN-WEYL: "Methoden der Organischen Chemie", Band XII/1, 1963, Seiten 80,81, Georg Thieme Verlag, Stuttgart, DE<br>* Seiten 80,81 * | 1 | C 07 F 9/54 |
| X | "Beilsteins Handbuch der Organischen Chemie", Auflage 4, herausgegeben von der Deutschen Chemischen Gesellschaft, 1922, Verlag von Julius Springer, Berlin, DE<br>* Seiten 580-581, Absatz: "Trimethylphosphin" * | 1 | |

RECHERCHIERTE SACHGEBIETE (Int. Cl.5)

C 07 F 9/00

Der vorliegende Recherchenbericht wurde für alle Patentansprüche erstellt

| Recherchenort | Abschlußdatum der Recherche | Prüfer |
|---|---|---|
| Den Haag | 12 August 91 | OUSSET J-B. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument